(19) **Europäisches Patentamt**

**European Patent Office**

**Office européen des brevets**

(11) **EP 0 858 142 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.⁷: **H02J 13/00**

(21) Anmeldenummer: **97102091.2**

(22) Anmeldetag: **10.02.1997**

(54) **Spannungsversorger**

Power supply

Circuit d'alimentation

(84) Benannte Vertragsstaaten:
**CH DE FR LI**

(43) Veröffentlichungstag der Anmeldung:
**12.08.1998 Patentblatt 1998/33**

(73) Patentinhaber: **SIEMENS AKTIENGESELLSCHAFT**
**80333 München (DE)**

(72) Erfinder: **Zierhut, Hermann, Dipl.-Ing.**
**93073 Neutraubling (DE)**

(56) Entgegenhaltungen:

| | |
|---|---|
| DE-A- 3 629 937 | DE-A- 4 221 916 |
| GB-A- 2 135 854 | US-A- 4 788 461 |
| US-A- 5 391 932 | US-A- 5 396 555 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf einen Spannungsversorger für ein Bussystem für Teilnehmerstationen, das Gleichspannung für die Bordnetzversorgung der Teilnehmerstationen fuhrt und Wechselspannung für Information, beispielsweise in Form von Impulsen, im Einzelnen gemäß Oberbegriff des Patentanspruchs 1. Ein Spannungsversorger entsprechend dem Oberbegriff von Anspruch 1 ist aus der US-A-5 391 932 bekannt.

Der Erfindung liegt die Aufgabe zugrunde, einen Spannungsversorger ohne Übertrager mit verbesserten Eigenschaften zu entwickeln.

Die Lösung der geschilderten Aufgabe erfolgt durch einen Spannungsversorger nach Anspruch 1. Hierbei ist der Operationsverstärker wie im Kennzeichnenden Teil von Anspruch 1 definiert beschaltet . Der erste Kondensator ist dabei so dimensioniert, daß er für Wechselspannung in Form der Bitimpulse auf dem Bus keinen nennenswerten Widerstand darstellt.

Es ist günstig, wenn die erste Kapazität und der zweite Widerstand hinsichtlich ihres komplexen Widerstandes, ihrer Impedanz, eine untere Grenzfrequenz etwa zwischen 100 Hz und 1 kHz aufweisen. Man erhält so einen praxisgerechten Übertragungsbereich.

Die Beschaltung des Operationsverstärkers kann hinsichtlich der ersten und dritten Widerstände vorteilhaft so gewählt werden, daß der Wellenwiderstand W eines anzuschließenden Busses gemäß der Beziehung nachgebildet ist:

$$W = R3x\,\frac{R1}{R2}$$

Nach einer Weiterbildung wird das Schaltungsnetzteil hinsichtlich seiner Ausgänge aus zwei symmetrisch ausgebildeten Schaltungszweigen realisiert. Um besonders symmetrische Eigenschaften zu erzielen, ist es günstig, wenn jeder Schaltungszweig den halben Wellenwiderstand des Busses nachbildet.

Die Erfindung soll nun anhand von in der Zeichnung grob schematisch wiedergegebenen Ausführungsbeispielen näher erläutert werden.

In FIG 1 ist ein erstes Ausführungsbeispiel veranschaulicht.

In FIG 2 ist ein Ausführungsbeispiel mit symmetrischer Anordnung dargestellt.

In FIG 3 ist ein Diagramm wiedergegeben. Auf der Abszisse ist die Frequenz von 0 Hz bis 100 MHz aufgetragen. Auf der Ordinate ist der Widerstand von 0 bis 100 Ohm aufgetragen, der als Wellenwiderstand der Busleitung verstanden werden kann.

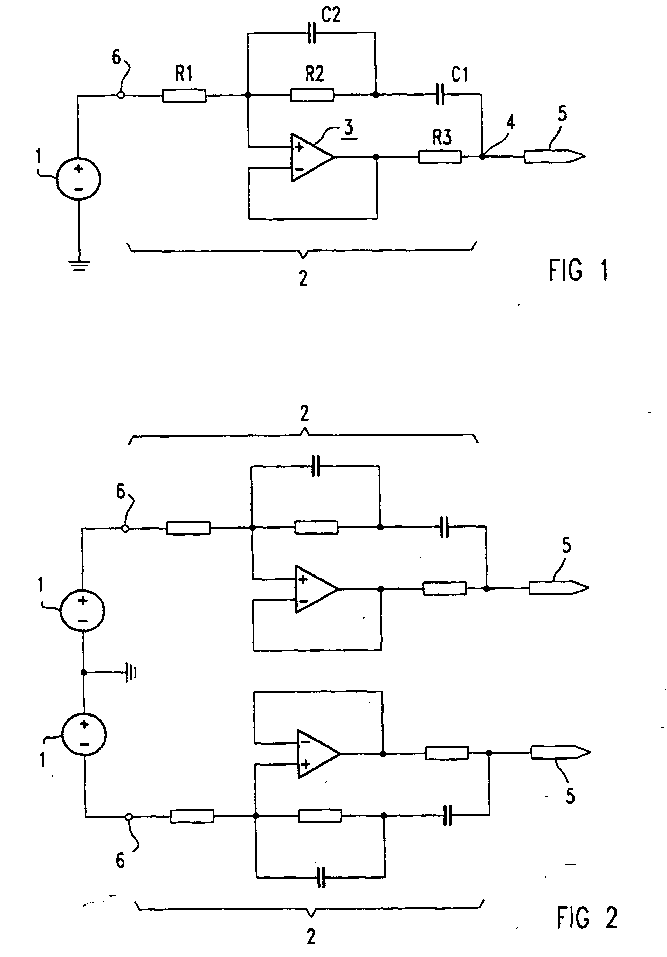

In FIG 1 ist ein besonders einfaches und kostengünstiges Ausführungsbeispiel veranschaulicht. Der Wellenwiderstand der Busleitung läßt sich hiermit besonders wirtschaftlich und effektiv nachbilden. Der Spannungsversorger nach FIG 1 besteht aus einer Spannungsquelle 1 und aus einem im Ausführungsbeispiel in Reihe geschalteten Schaltungsnetzteil 2. Hierbei wird die bisher übliche Induktivität durch das Schaltungsnetzteil 2 ersetzt, das einen Operationsverstärker 3 für das erforderliche Leistungsspektrum in einer besonderen Schaltung aufweist. Für die Wechselspannung der Information wird ein Innenwiderstand gebildet, der zumindest in etwa dem Wellenwiderstand eines anzuschließenden Busses nachgebildet ist. Am Ausgangsanschluß 4 kann ein Busleiter 5 angeschlossen werden. Der Innenwiderstand für Gleichstrom läßt sich vergleichsweise niedrig halten, etwa in einer Größenordnung kleiner als 1 Ohm.

Der Spannungsversorger weist im Ausführungsbeispiel nach FIG 1 am Eingang 6 des Schaltungsnetzteils 2 einen ersten Widerstand R1 auf, hinter dem eine Parallelschaltung aus zweitem Widerstand R2 in Reihe mit einer ersten Kapazität C1 in einem Zweig angeordnet ist. Ein Operationsverstärker 3 ist im anderen Zweig der Parallelschaltung an seinem nicht invertierenden Eingang angeschlossen. In diesem anderen Zweig ist auch ein dritter Widerstand R3 in Reihe angeschlossen. Hinter dem dritten Widerstand R3 liegt der Ausgangsanschluß 4 des Schaltungsnetzteils 2. Der invertierende Eingang des Operationsverstärkers 3 ist mit dem Ausgang des Operationsverstärkers verbunden. Parallel zum zweiten Widerstand R2 ist eine zweite Kapazität C2 angeschlossen.

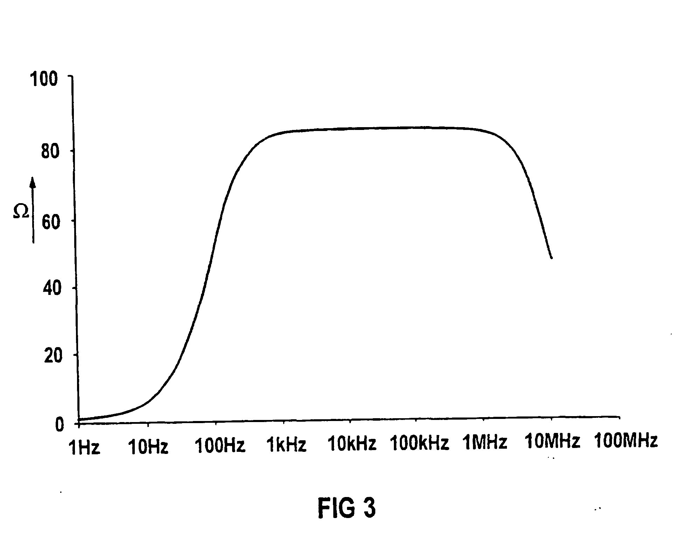

Die erste Kapazität C1 und der zweite Widerstand R2 sind hinsichtlich ihres komplexen Widerstandes bzw. ihrer Impedanz für eine untere Grenzfrequenz zwischen 100 Hz und 1 kHz ausgelegt, wie es im Diagramm nach FIG 3 veranschaulicht ist. Die Beschaltung des Operationsverstärkers ist im Ausführungsbeispiel hinsichtlich der Widerstände R1, R2 und R3 derart gewählt, daß der Wellenwiderstand W gemäß der Beziehung nachgebildet ist:

$$W = R3x\,\frac{R1}{R2}.$$

Für das Ausführungsbeispiel ist der Wellenwiderstand aus dem Diagramm nach FIG 3 veranschaulicht.

Der Spannungsversorger im Ausführungsbeispiel nach FIG 1 wirkt infolge seiner Beschaltung als reiner Spannungsfolger für Gleichstrom, dessen Innenwiderstand in der Größenordnung von 1 Ohm oder weniger liegt. Wenn die erste Kapazität C1 so groß bemessen ist, daß sie für die Bitimpulse der Wechselspannung auf dem Bus keinen Widerstand mehr darstellt, folgt der Innenwiderstand Ri der Beziehung

$$Ri = R3x\,\frac{R1 + R2}{R2 + R3}$$

Wenn R2 sehr viel kleiner als R1 ist und R3 sehr viel kleiner als R2, ergibt sich näherungsweise die Beziehung für den Wellenwiderstand W gemäß

$$W = R3x \frac{R1}{R2} .$$

Die Rückkopplung über die erste Kapazität C1 und den zweiten Widerstand R2 sowie den ersten Widerstand R1 ist also nur für Wechselstrom gegeben.

Bei einem verdrillten Zweidrahtbus, einem sogenannten Twisted-Pair, ergibt sich der besondere Vorteil, daß sich die ausgeprägte Grenzfrequenz des Busses leicht nachbilden läßt, in dem durch die Serienschaltung der ersten Kapazität C1 und des zweiten Widerstandes R2 sowie der hierzu parallel geschalteten zweiten Kapazität C2 dem Rückkopplungszweig des Operationsverstärkers leicht entsprochen werden kann. In der Praxis kann die zweite Kapazität C2 beispielsweise in einer Größenordnung zwischen 10 und 100 pF gewählt werden.

Ein vollkommen symmetrischer Aufbau eines Spannungsversorgers wird durch einen Aufbau nach FIG 2 erzielt. Zweckmäßigerweise werden auch zwei symmetrisch geschaltete Spannungsquellen 1 eingesetzt, denen zwei Schaltungsnetzteile 2 folgenden, die zueinander völlig symmetrisch sind, so daß zwei Busleiter 5, die einen zweiadrigen Bus bilden, völlig symmetrisch geschaltet sind. Jeder Schaltungszweig ist dann vorteilhaft so auszulegen, daß er den halben Wellenwiderstand nachbildet.

**Patentansprüche**

1.  Spannungsversorger für ein Bussystem für Teilnehmerstationen, das Gleichspannung für die Bordnetzversorgung der Teilnehmerstationen führt und Wechselspannung für Information, beispielsweise in Form von Impulsen, im Prinzip bestehend aus einer Spannungsquelle (1) und der Wirkung nach aus einer Induktivität in Reihe, wobei die Induktivität durch ein Schaltungsnetzteil (2) ersetzt ist, das einen Operationsverstärker (3) in einer derartigen Schaltung aufweist, daß für die Wechselspannung der Information ein Innenwiderstand gebildet ist, der zumindest in etwa dem Wellenwiderstand eines anzuschließenden Busses (5) nachgebildet ist, und daß der Innenwiderstand für Gleichstrom vergleichsweise klein ist, die Spannungsquelle (1) über einen Eingang (6) des Schaltungsnetzteiles (2) und einen ersten Widerstand (R1) mit dem nicht invertieren den Eingang (+) des Operationsverstärkers (3) verbunden ist,
    **dadurch gekennzeichnet, dass** und (R3)

    -   der Ausgang des Operationsverstärkes (3) über einen dritten Widerstand (R3) mit dem Ausgang (4) des Schaltungsnetzteiles zur Ankopplung an einen Busleiter (5) verbunden ist,

    -   der invertierende Eingang (-) des Operationsverstärkers mit dem Ausgang des Operationsverstärkers (3) verbunden ist, und

    -   der Ausgang des Schaltungsnetzteiles über eine erste Kapazität (C1) und einen zweiten Widerstand (R2) mit dem nicht invertierenden Eingang (+) des Operationsverstärkers verbunden ist, wobei dem zweiten Widerstand (R2) eine zweite Kapazität (C2) parallel geschaltet ist.

2.  Spannungsversorger nach Anspruch 1,
    **dadurch gekennzeichnet,**
    **daß** der Innenwiderstand für Gleichstrom kleiner als 1 Ohm ist.

3.  Spannungsversorger nach Anspruch 1,
    **dadurch gekennzeichnet,**
    **daß** die erste Kapazität (C1) und der zweite Widerstand (R2) hinsichtlich ihres komplexen Widerstandes, ihrer Impedanz, eine untere Grenzfrequenz etwa zwischen 100 Hz und 1 kHz aufweisen.

4.  Spannungsversorger nach einem der vorhergehenden Ansprüche,
    **dadurch gekennzeichnet,**
    **daß** die Beschaltung des Operationsverstärkers (3) hinsichtlich der Widerstände (R1, R2, R3) derart gewählt ist, daß der Wellenwiderstand (W) gemäß der Beziehung

    $$W = R3x \frac{R1}{R2}$$

    ausgebildet ist.

5.  Spannungsversorger nach Anspruch 1,
    **dadurch gekennzeichnet,**
    **daß** das Schaltungsnetzteil hinsichtlich seiner Ausgänge aus zwei symmetrisch ausgebildeten Schaltungsnetzteilen (2) besteht.

6.  Spannungsvorsorger nach Anspruch 5,
    **dadurch gekennzeichnet,**
    **daß** jedes Schaltungsnetzteil (2) den halben Wellenwiderstand nachbildet.

**Claims**

1.  Power supply for a bus system for subscriber stations, which feeds dc voltage for the on-board network supply of the subscriber stations and ac voltage for information, for example in the form of pulses, principally consisting of a voltage source (1) and according to its effect, of a series inductance, with the inductance being replaced by a switched-mode power supply (2), which features an operational amplifier (3) in a circuit which is embodied such that an internal resistance is formed for the ac voltage of the information which is at least simulated in approximately the wave impedance of a bus to be connected (5) and with the internal resistance for direct current being comparatively small, the voltage source (1) is connected via an input (6) of the switched-mode power supply and a first resistor (R1) to the non-inverting input (+) of the operational amplifier (3),
**characterized in that**

- the output of the operational amplifier (3) is connected via a third resistor (R3) to the output (4) of the switched mode power supply for coupling to a bus line (5)
- the inverting input (+) of the operational amplifier is connected to the output of the operational amplifier (3), and
- the output of the switched-mode power supply is connected via a first capacitor (C1) and a second resistor (R2) to the non-inverting input (+) of the operational amplifier, with the second resistor (R2) being connected in parallel to a second capacitor (C2).

**2.** Power supply in accordance with claim 1,
**characterized in that**
the internal resistance of the direct current is less than 1 Ohm.

**3.** Power supply in accordance with claim 1,
**characterized in that**
the first capacitor (C1) and the second resistor (R2) have a lower limit frequency somewhere between 100 Hz and 1 kHz as regards their complex resistance, their impedance.

**4.** Power supply in accordance with one of the previous claims,
**characterized in that**
the circuit of the operational amplifier (3), as regards the resistors (R1, R2, R3), is selected such that the wave impedance W is embodied according to the relationship

$$W = R3x \frac{R1}{R2}$$

**5.** Power supply in accordance with claim 1,
**characterized in that**
the switched-mode power supply consists of two symmetrically embodied switched-mode power supplies (2) as regards its outputs.

**6.** Power supply in accordance with claim 5,
**characterized in that**
each switched-mode power supply (2) simulates the half wave impedance.

## Revendications

**1.** Circuit d'alimentation en tension qui est destiné à un système de bus pour postes d'abonnés qui conduit une tension continue pour l'alimentation de réseau de bord des postes d'abonnés et une tension alternative pour de l'information, par exemple sous la forme d'impulsions, et qui est constitué en principe d'une source de tension (1) et, pour ce qui est de son effet, d'une inductance branchée en série, l'inductance étant remplacée par un bloc d'alimentation (2) qui comporte un amplificateur opérationnel (3) dans un circuit tel qu'il se forme pour la tension alternative de l'information une résistance interne qui est reproduite au moins sensiblement par l'impédance caractéristique d'un bus à raccorder (5), la résistance interne pour le courant continu étant relativement petite et la source de tension (1) étant reliée par l'intermédiaire d'une entrée (6) du bloc d'alimentation (2) et d'une première résistance (R1) à l'entrée non inversée (+) de l'amplificateur opérationnel (3),
**caractérisé par le fait que**

- la sortie de l'amplificateur opérationnel (3) est reliée par l'intermédiaire d'une troisième résistance (R3) à la sortie (4) du bloc d'alimentation pour le couplage à un conducteur de bus (5),
- l'entrée inversée (-) de l'amplificateur opérationnel est reliée à la sortie de l'amplificateur opérationnel (3), et
- la sortie du bloc d'alimentation est reliée par l'intermédiaire d'une première capacité (C1) et d'une deuxième résistance (R2) à l'entrée non inversée (+) de l'amplificateur opérationnel, une deuxième capacité (C2) étant branchée en parallèle avec la deuxième résistance (R2).

**2.** Circuit d'alimentation en tension selon la revendication 1,
**caractérisé par le fait que** la résistance interne pour le courant continu est inférieure à 1 Ω.

**3.** Circuit d'alimentation en tension selon la revendication 1,
**caractérisé par le fait que** la première capacité (C1) et la deuxième résistance (R2) présentent pour ce qui est de leur résistance complexe, de leur impédance, une fréquence limite inférieure comprise entre environ 100 Hz et 1 kHz.

**4.** Circuit d'alimentation en tension selon l'une des revendications précédentes,
**caractérisé par le fait que** le branchement de l'amplificateur opérationnel (3) pour ce qui est des résistances (R1, R2, R3) est choisi de telle sorte que l'impédance caractéristique (W) est conçue selon la relation :

$$W = R3 \times \frac{R1}{R2}.$$

5. Circuit d'alimentation en tension selon la revendication 1,

   **caractérisé par le fait que** le bloc d'alimentation est constitué, pour ce qui est de ses sorties, de deux blocs d'alimentation (2) conçus symétriques.

6. Circuit d'alimentation en tension selon la revendication 5,

   **caractérisé par le fait que** chaque bloc d'alimentation (2) reproduit la moitié de l'impédance caractéristique.

FIG 1

FIG 2

**FIG 3**